# EUROPÄISCHE PATENTSCHRIFT

(11) **EP 2 522 450 B1**
(45) Veröffentlichungstag und Bekanntmachung des Hinweises auf die Patenterteilung: **10.07.2019**
(21) Anmeldenummer: 12003434.3
(22) Anmeldetag: 04.05.2012
(51) Int. Cl.: B23D 63/16

(54) **Anordnung zum Feilen einer Sägekette**
Assembly for filing a saw chain
Agencement pour le limage d'une chaîne de scie

(30) Priorität: 11.05.2011 DE 102011101173
(43) Veröffentlichungstag der Anmeldung: 14.11.2012
(73) Patentinhaber: Andreas Stihl AG & Co. KG, 71336 Waiblingen (DE)
(72) Erfinder: Föhrenbach, Jan, 70378 Stuttgart (DE); Huentz, Christine, 70182 Stuttgart (DE)
(74) Vertreter: Reinhardt, Annette

(56) Entgegenhaltungen:
- US-A- 2 817 252
- US-A- 4 719 823
- US-A- 4 864 897
- US-A- 5 241 882

## Beschreibung

Die Erfindung betrifft eine Anordnung zum Feilen einer Sägekette mit einer Führung für einen Feilenhalter, einem Feilenhalter, einer Feile und einer Sägekette.

Aus der US 4,719,823 ist eine Anordnung zum Feilen einer Sägekette mit einer Führung für einen Feilenhalter bekannt. Die Führung für den Feilenhalter besitzt einen Kanal, der auf die Sägekette aufgesetzt wird. Der Feilenhalter wird anschließend mit Befestigungselementen an der Sägekette fixiert. Beim Feilen liegt der Feilenhalter zwischen einer Seitenführung und dem zu feilenden Schneidzahn. Um eine gute Führung für den Feilenhalter zu erreichen, muss der Abstand zwischen Schneidzahn und der Seitenführung genau eingestellt werden.

Aus der US 2,817,252 ist eine Anordnung zum Feilen einer Sägekette bekannt. Eine runde Feile ist zusammen mit einem runden Führungsstab an einem Feilengriff angebracht. Der runde Führungsstab wird in einen Führungshalter eingeführt, wodurch die Feile geführt wird. Der Führungshalter muss relativ zur Sägekette genau eingestellt werden, um eine gute Führung der runden Feile zu erreichen. Aus der US 5,241,882 ist eine Führung für eine Feile bekannt, die ein Aufsetzteil und einen Schlitten umfasst. Die Feile ist direkt in der Führung geführt.

Die US 4,864,897 ist der nächstliegender Stand der Technik und offenbart eine Anordnung gemäß dem Oberbegriff des Anspruchs 1.

Die US 4,864,897 zeigt eine Führung für einen Feilenhalter mit einem auf die Sägekette aufzusetzenden Rahmen und einem drehbar an dem Rahmen gelagerten Führungsteil für den Feilenhalter. Das Führungsteil besitzt Öffnungen, die mit einem Pin am Rahmen zusammenwirken und dadurch konstruktiv vorgegebene Drehlagen des Führungsteils gegenüber der Sägekette festlegen.

Der Erfindung liegt die Aufgabe zugrunde, eine vereinfachte Anordnung zum Feilen einer Sägekette anzugeben.

Diese Aufgabe wird bezüglich der Anordnung zum Feilen einer Sägekette mit den Merkmalen des Anspruchs 1 gelöst.

Die Führung dient lediglich dazu, die Richtung, in der der Feilenhalter bezogen auf den Schneidzahn anzuordnen ist, festzulegen. Ansonsten erfolgt die Führung des Feilenhalters über den Schneidzahn und den vorlaufenden Tiefenbegrenzer. Dadurch, dass der Schlitten in der Verschieberichtung verschiebbar gelagert ist, kann der Schlitten mit dem Feilenhalter bei zunehmender Abnutzung des Schneidzahns einfach nachgeführt werden. Der Ausdruck "quer zur Längsrichtung der Sägekette" bezeichnet dabei jede Richtung, die mit der Längsrichtung der Sägekette einen von 0° abweichenden Winkel einschließt, also alle Richtungen mit Ausnahme der Richtung parallel zur Längsrichtung der Sägekette.

Die Verschieberichtung steht bei auf der Sägekette aufgesetzter Führung senkrecht zur Dachkante des zu feilenden Schneidzahns. Dadurch wird beim Verschieben der Winkel des Feilenhalters zum Schneidzahn beibehalten. Eine gute Führung ergibt sich, wenn der Feilenhalter zwischen zwei Seitenführungen des Schlittens geführt ist. Dadurch ist auf einfache Weise ein Feilen in der vorgegebenen Richtung möglich. Ein Abheben des Feilenhalters von der Seitenführung, wie es bei einer Führung an nur einer Längsseite möglich ist, kann vermieden werden.

Vorteilhaft ist bei in der Aufnahme angeordnetem Feilenhalter geringes Spiel zwischen dem Feilenhalter und der Aufnahme gegeben, so dass der Feilenhalter einfach in die Aufnahme einsetzbar und aus dieser lösbar ist. Dadurch, dass nur geringes Spiel gegeben ist, wird eine genaue Führung des Feilenhalters erreicht. Vorteilhaft verlaufen die Seitenführungen parallel zueinander, wobei der Abstand der Seitenführungen etwa 100% bis etwa 120% der Breite des Feilenhalters entspricht. Als besonders vorteilhaft wird geringes Spiel zwischen dem Feilenhalter und den Seitenführungen angesehen.

Vorteilhaft besitzt das Aufsetzteil mindestens zwei einander zugeordnete Aussparungen, mit denen das Aufsetzteil auf der Sägekette aufsetzbar ist. Die Mittellinie der beiden Aussparungen schließt mit den Seitenführungen des Schlittens vorteilhaft einen Winkel ein, der mit einem Zahnwinkel der Sägekette einen Winkel von 90° ergibt. Durch die Ausrichtung der beiden Aussparungen ist die Winkellage des Aufsetzteils zur Längsrichtung der Sägekette konstruktiv vorgegeben. Durch die angegebene Winkelsumme von 90° wird erreicht, dass der Feilenhalter in der Aufnahme immer parallel zur vorlaufenden Dachkante des zu feilenden Schneidzahns geführt ist. Die einander zugeordneten Aussparungen sind vorteilhaft in zueinander parallel verlaufenden Wandabschnitten des Aufsetzteils angeordnet. Der Abstand der einander zugeordneten Aussparungen entspricht vorteilhaft etwa dem 4fachen der Teilung der Sägekette. Dadurch kann eine der Aussparungen auf die beiden dem Schneidglied vorlaufenden Verbindungsglieder aufgesetzt werden und die andere, zugeordnete Aussparung auf die beiden dem zu feilenden Schneidglied nachlaufenden Verbindungsglieder. Dabei werden die Aussparungen vorteilhaft in den Bereich zwischen den Nietbolzen eingesetzt. Vorteilhaft besitzt die Führung zwei erste Aussparungen, deren Mittellinie mit den Seitenführungen des Schlittens einen Winkel einschließen, der mit dem Zahnwinkel der rechten Schneidzähne einen Winkel von 90° ergibt und zwei zweite Aussparungen, deren Mittellinie mit den Seitenführungen des Schlittens einen Winkel einschließt, der mit dem Zahnwinkel der linken Schneidzähne einen Winkel von 90° ergibt. Durch Umsetzen des Aufsetzteils kann dadurch die Ausrichtung des Schlittens an linke oder rechte Schneidzähne angepasst werden. Dadurch werden nur ein Schlitten und eine Aufnahme für den Feilenhalter zum Feilen rechter und linker Schneidzähne benötigt. Daraus ergibt sich auch eine geringe Baugröße der Führung.

Vorteilhaft ist die Breite der Aussparungen größer als die Breite der Sägekette zwischen zwei Nietbolzen eines Verbindungsglieds und kleiner als die Breite eines Nietbolzens. Dadurch ist das Aufsetzteil auf einfache Weise in Längsrichtung der Sägekette zwischen den beiden Nietbolzen gesichert. Zusätzliche Mittel zum Fixieren des Aufsetzteils werden nicht benötigt. Um sicherzustellen, dass der Feilenhalter nur auf dem Schneidzahn und dem vorlaufenden Tiefenbegrenzer aufliegt und nicht zusätzlich am Boden der Aufnahme, ist vorgesehen, dass die Dächer der Aussparungen in einer Ebene liegen, die die Aufnahme für den Feilenhalter durchragt. Die gedachte Ebene, in der die Dächer, also die Oberkanten der Aufnahmen liegen, verläuft demnach durch die Aufnahme und ist nicht unterhalb der Aufnahme angeordnet. Die Ebene verläuft in einem Abstand zum Boden der Aufnahme und liegt näher am Feilenhalter als der Boden der Aufnahme. Der Boden der Aufnahme wird dabei durch mindestens einen Quersteg gebildet, der die Seitenführungen miteinander verbindet. An dem Quersteg ist vorteilhaft mindestens eine Lasche zur verschiebbaren Lagerung des Schlittens an dem Aufsetzteil angeordnet. Dadurch ergibt sich ein einfacher Aufbau.

Für eine Führung für einen Feilenhalter mit Feile, mit einem an einer Sägekette festlegbaren Aufsetzteil und einem an dem Aufsetzteil in einer Verschieberichtung verschiebbar gelagerten Schlitten ist vorgesehen, dass der Schlitten zwei parallel und in einem Abstand zueinander angeordnete Seitenführungen besitzt, die senkrecht zur Verschieberichtung angeordnet sind, und die eine Aufnahme für einen Feilenhalter begrenzen. Durch die Anordnung der Aufnahme des Feilenhalters an einem verschiebbar gelagerten Schlitten ist auf einfache Weise ein Nachführen des Feilenhalters beim Feilen des Schneidzahns möglich.

Ein Ausführungsbeispiel der Erfindung wird im Folgenden anhand der Zeichnung erläutert. Es zeigen:
- Fig. 1: eine perspektivische Darstellung einer Anordnung zum Feilen einer Sägekette,
- Fig. 2: eine Draufsicht auf die Anordnung aus Fig. 1,
- Fig. 3: einen Schnitt entlang der Linie III-III in Fig. 2,
- Fig. 4: eine Draufsicht auf eine Anordnung aus Sägekette und auf die Sägekette aufgesetzte Führung,
- Fig. 5: eine Seitenansicht in Richtung des Pfeils V in Fig. 4,
- Fig. 6: eine Seitenansicht in Richtung des Pfeils VI in Fig. 4,
- Fig. 7 bis 9: perspektivische Darstellungen der Führung in unterschiedlichen Stellungen des Schlittens.

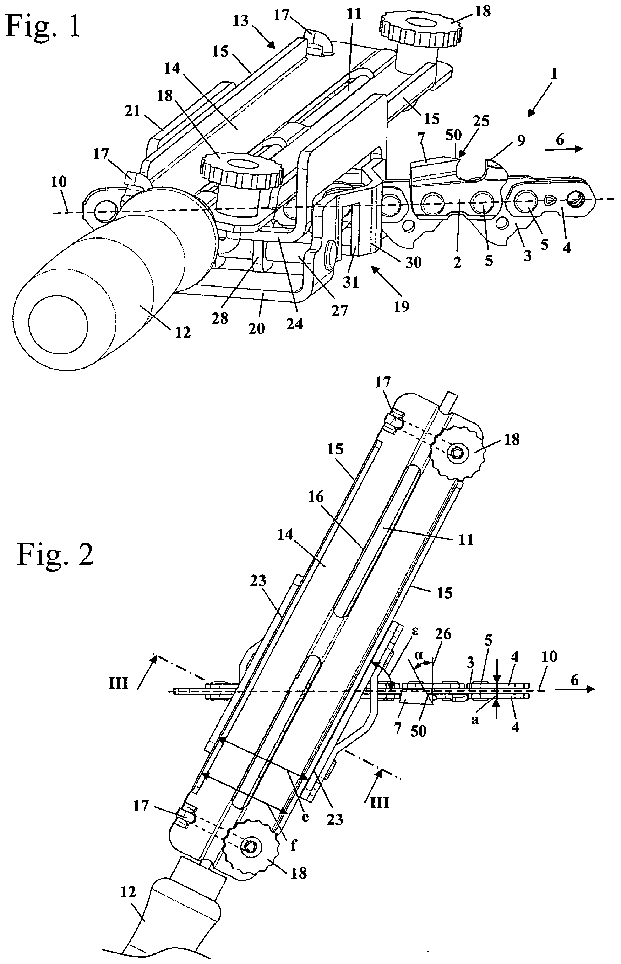

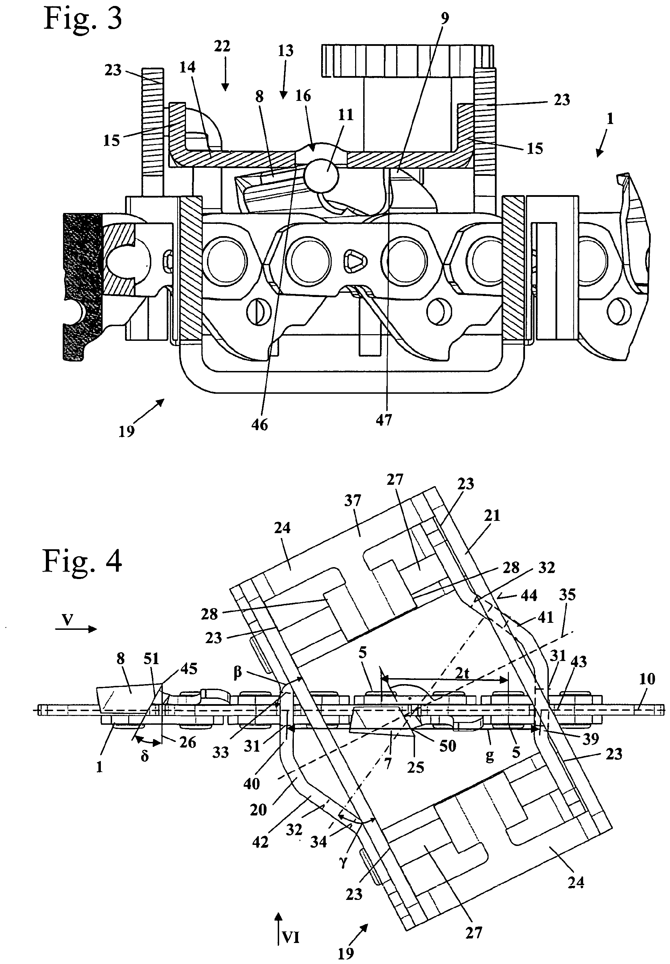

Fig. 1 zeigt eine Sägekette 1, die aus über Nietbolzen 5 gelenkig miteinander verbundenen mittleren Treibgliedern 3 und seitlichen Verbindungsgliedern 4 besteht. Die Verbindungsglieder 4 sind teilweise als Schneidglieder 2 ausgebildet, wobei die Schneidglieder 2 in Laufrichtung 6 gesehen abwechselnd einen rechten Schneidzahn 7 und einen linken Schneidzahn 8 aufweisen. Vorlaufend und nachlaufend zwischen den Schneidgliedern 2 sind Verbindungsglieder 4 angeordnet. Vorlaufend zu jedem Schneidzahn 7, 8 ist ein Tiefenbegrenzer 9 vorgesehen, wobei der Tiefenbegrenzer 9 im Ausführungsbeispiel an dem jeweiligen Schneidglied 2 angeformt ist. Der rechte Schneidzahn 7 besitzt eine Schneide 25 mit einer Dachkante 50, und der linke Schneidzahn 8 besitzt, wie Fig. 4 zeigt, eine Schneide 45 mit einer Dachkante 51. Die Dachkante 50, 51 bezeichnet die obere, vorlaufende, quer zur Längsrichtung 10 der Sägekette 1 liegende Kante des Schneidzahns 7, 8.

Auf die Sägekette 1 ist eine Führung 19 für einen Feilenhalter 13 aufgesetzt. Der Feilenhalter 13 besitzt eine Grundplatte 14, an der parallel zueinander angeordnete Seitenwände 15 verlaufen. An der Grundplatte 14 ist eine Feile 11 gehalten, die parallel zu den Seitenwänden 15 ausgerichtet ist. Die Feile 11 ist über Fixierbügel 17 und Fixierschrauben 18 an dem Feilenhalter 13 festgeklemmt. Der Griff 12 des Feile 11 ragt von der Grundplatte 14 weg nach außen, so dass der Feilenhalter 13 mit der Feile 11 am Griff 12 geführt werden kann. Wie die Figuren 2 und 3 zeigen, ist die Feile 11 an der Grundplatte 14 in einer Aufnahme 16 angeordnet. Die Aufnahme 16 ist durch Vertiefungen an der Grundplatte 14 begrenzt.

Wie Fig. 1 zeigt, besitzt die Führung 19 ein Aufsetzteil 20, das auf die Sägekette 1 aufgesetzt ist, sowie einen Schlitten 21, der an dem Aufsetzteil 20 verschiebbar gelagert ist. Zur verschiebbaren Lagerung des Schlittens 21 besitzt das Aufsetzteil 20 zwei Führungsbolzen 27, die Laschen 28 des Schlittens 21 durchragen und den Schlitten 21 so in Längsrichtung der Führungsbolzen 27 führen. Wie Fig. 1 auch zeigt, besitzt das Aufsetzteil 20 Seitenwände 30 mit Aussparungen 31 zum Aufsetzen des Aufsetzteils auf die Sägekette 1. Die Aussparungen 31 werden im Folgenden noch näher erläutert.

Wie Fig. 2 zeigt, besitzt der Schlitten 21 zwei Seitenführungen 23, die parallel zueinander und in einem Abstand e zueinander verlaufen. Der Abstand e beträgt etwa 100% bis etwa 120% der Breite f des Feilenhalters 13. Vorteilhaft ist der Feilenhalter 13 mit geringem Spiel zwischen den Seitenführungen 23 geführt. Wie Fig. 2 zeigt, verlaufen die Seitenführungen 23 in einem Winkel ε zur Längsrichtung 10 der Sägekette 1. Dadurch ist der Feilenhalter 13 gegenüber der Sägekette 1 geneigt. Fig. 2 zeigt auch den Zahnwinkel α, den die Dachkante 50 der Schneide 25 eines rechten Schneidzahns 7 mit einer Senkrechten 26 zur Längsrichtung 10 einschließt. In Fig. 2 ist außerdem die Breite a der Sägekette 1 gezeigt, die im Bereich von Verbindungsgliedern 4 zwischen den Nietbolzen 5 gemessen ist. Die Seitenführung 23 verläuft parallel zur Dachkante 50, 51 der Schneide 25, 45 des zu feilenden Schneidzahns 7, 8.

Fig. 3 zeigt die Anordnung des Feilenhalters 13 an der Führung 19. Der Feilenhalter 13 ist in einer Aufnahme 22 angeordnet, die von den Seitenführungen 23 begrenzt ist. Der Feilenhalter 13 liegt dabei auf dem zu feilenden Schneidzahn 8 an einer ersten Auflagestelle 46 und an dem vorlaufenden Tiefenbegrenzer 9 an einer zweiten Auflagestelle 47 an. Zu dem in Fig. 4 gezeigten Boden 37 der Aufnahme 22 besitzt die Feile 11 einen Abstand, so dass der Feilenhalter 13 ausschließlich am Schneidzahn 8, dem Tiefenbegrenzer 9 sowie den Seitenführungen 23 geführt ist.

Wie Fig. 4 zeigt, ist der Schlitten 21 in einer Verschieberichtung 35 an dem Aufsetzteil 20 verschiebbar gelagert. Die Verschieberichtung 35 steht senkrecht zur Schneide 25 des zu feilenden rechten Schneidzahns 7. Die Seitenführungen 23 des Schlittens 21 sind über zwei Querstege 24 miteinander verbunden, an denen die Laschen 28 angeformt sind. Die Führungsbolzen 27 ragen durch die Laschen 28.

Fig. 4 zeigt die Führung 19 in der Stellung zum Feilen eines rechten Schneidzahns 7. In dieser Stellung ist das Aufsetzteil 20 mit zwei ersten Aussparungen 31 auf die Sägekette 1 aufgesetzt. Die Mittellinie 43 durch die beiden ersten Aussparungen 31 liegt parallel zur Längsrichtung 10 der Sägekette 1 und fällt in der in Fig. 4 gezeigten Draufsicht mit dieser zusammen. Wie Fig. 4 zeigt, besitzen die beiden Aussparungen 31 einen Abstand g zueinander, der dem 4fachen der Teilung t der Sägekette 1 entspricht. Die Teilung t ist dabei der halbe Abstand der Mitte von einem Nietbolzen 5 zur Mitte des übernächsten Nietbolzens 5. Die Abstände benachbarter Nietbolzen 5 müssen dabei nicht gleich sein. Die Teilung t ist der mittlere Abstand der Nietbolzen 5. In Fig. 4 ist die doppelte Teilung 2t eingezeichnet. Wie Fig. 4 zeigt, schließt die Mittellinie 43 mit der Seitenführung 23 einen Winkel β ein, der mit dem in Fig. 2 gezeigten Zahnwinkel α des rechten Schneidzahns 7 einen Winkel von 90° ergibt. Die beiden ersten Aussparungen 31 sind in zueinander parallel angeordneten Wandabschnitten 39, 40 des Aufsetzteils 20 angeordnet. Die Seitenwände 33 der ersten Aussparungen 31 verlaufen parallel zur Mittellinie 43.

Das Aufsetzteil 20 besitzt zwei weitere, zweite Aussparungen 32, deren Mittellinie 44 mit der Seitenführung 32 einen Winkel γ einschließt. Der Winkel γ ergibt mit einem Zahnwinkel δ eines linken Schneidzahns 8 einen Winkel von 90°. Der Zahnwinkel δ ist zwischen der Dachkante 51 der Schneide 45 des linken Schneidzahns 8 und einer Senkrechten 26 auf die Längsrichtung 10 gemessen. Die beiden zweiten Aussparungen 32 sind in zueinander parallel angeordneten Wandabschnitten 41 und 42 des Aufsetzteils 20 angeordnet. Die zweiten Aussparungen 32 besitzen Seitenwände 34, die parallel zur Mittellinie 44 verlaufen.

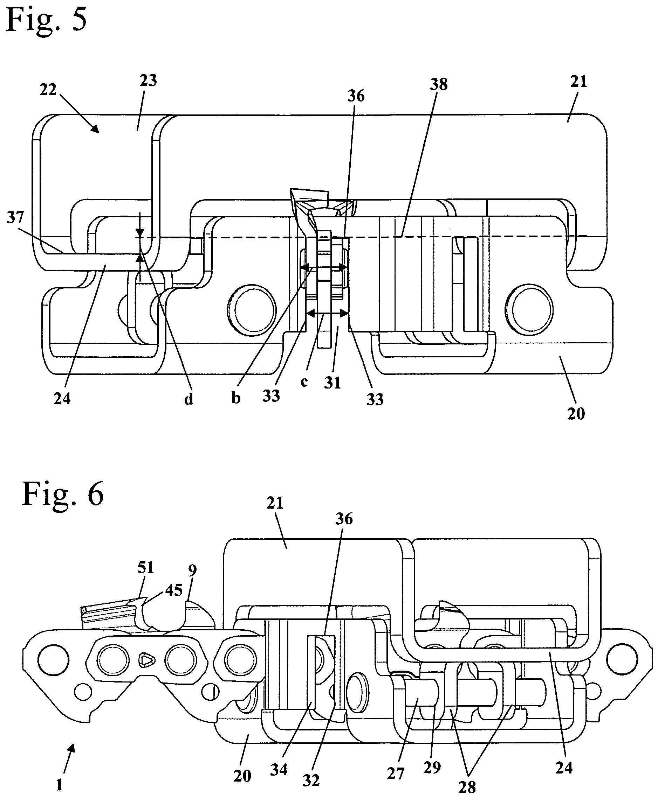

Wie Fig. 5 zeigt, besitzt die Aussparung 31 eine Breite c, die dem Abstand der beiden Seitenwände 33 entspricht. Der Nietbolzen 5 besitzt eine Breite b, die größer als die Breite c der Aussparung ist. Dadurch kann das Aufsetzteil 20 nicht über die Nietbolzen 5 hinweg verschoben werden. Die Breite c der Aussparung 31 ist größer als die Breite a der Sägekette 1 zwischen den Nietbolzen 5, so dass das Aufsetzteil 20 gut auf die Sägekette 1 aufgesetzt werden kann. Die Breiten a, b, c sind dabei senkrecht zur Längsrichtung 10 der Sägekette 1 gemessen.

Die Aussparung 31 besitzt ein Dach 36, das die obere Kante der Aussparung 31 bildet und auf der Sägekette 1 aufliegt. Die Dächer 36 der einander zugeordneten Aussparungen 31 liegen ebenso wie die Dächer 36 der Aussparungen 32 in einer gedachten Ebene 38, die die Aufnahme 22 schneidet, also oberhalb des Bodens 37 der Aufnahme 22 verläuft. Die Ebene 38 liegt nicht unterhalb der Aufnahme 22, sondern durchragt die Aufnahme 22. Dadurch ragt die Sägekette 1 von unten in die Aufnahme 22 ein. Dadurch wird sichergestellt, dass die Feile 11 und der Feilenhalter 13 nur auf dem Schneidzahn 7, 8 und dem vorlaufenden Tiefenbegrenzer 9 geführt sind und nicht am Boden 37 der Aufnahme 22. Im Ausführungsbeispiel besitzt der Boden 37 zur Ebene 38 einen Abstand d, der weniger als die Hälfte der Breite a der Sägekette 1 beträgt.

Wie Fig. 6 zeigt, besitzen die Laschen 28 Öffnungen 29, durch die die Führungsbolzen 27 ragen. Dadurch, dass an jedem Führungsbolzen 27 zwei Laschen 28 vorgesehen sind, wird ein Verkippen des Schlittens 21 gegenüber dem Aufsetzteil 20 weitgehend vermieden, und es ergibt sich eine gute Führung.

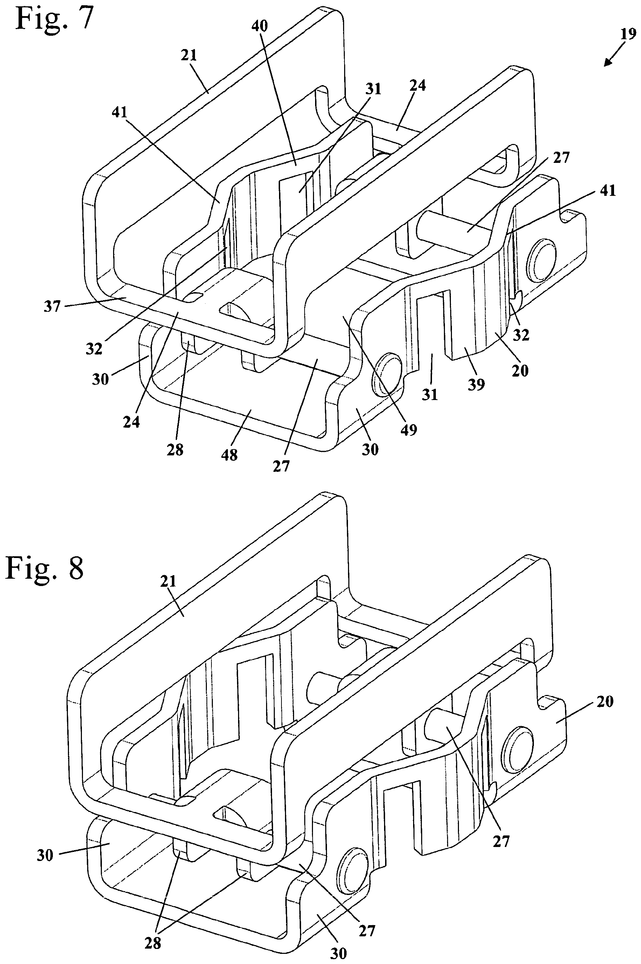

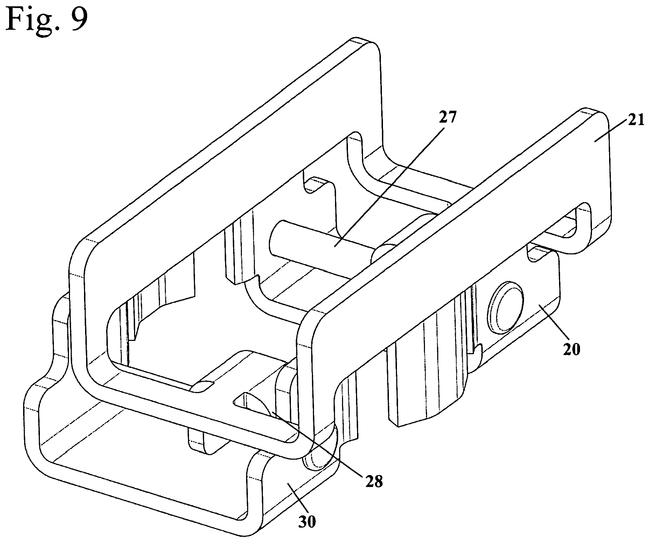

Die Figuren 7 bis 9 zeigen den Schlitten 21 in unterschiedlichen Stellungen am Aufsetzteil 20. Bei der in Fig. 7 gezeigten Stellung liegt eine der Laschen 28 an der Seitenwand 30 des Aufsetzteils 20 an. Fig. 8 zeigt den Schlitten 21 in einer mittleren Stellung und Fig. 9 in einer Stellung, in der die gegenüberliegende Lasche 28 an der gegenüberliegenden Seitenwand 30 anliegt.

Die Figuren 7 bis 9 zeigen den allgemeinen Aufbau der Führung 19. Das Aufsetzteil 20 und der Schlitten 21 sind jeweils als Blechbiegeteile ausgeführt, die zuvor ausgestanzt wurden. Das Aufsetzteil 20 besitzt einen Boden 48, der im Bereich zwischen den Aussparungen 31 und 32 eine Öffnung 49 besitzt, durch die die Sägekette 1 ins Innere der Führung 19 ragen kann. Der Boden 37 der Aufnahme 22 wird lediglich durch die beiden Querstege 24 gebildet. Die Querstege 24 sind benachbart zu den Stirnseiten der Führung 19 angeordnet. In den zwischen den Querstegen 24 angeordneten Bereich ragen die Seitenwände 30 des Aufsetzteils 20. Im Bereich der Aussparungen 31 und 32 sind die Seitenwände 30 des Aufsetzteils 20 nach außen gewölbt und bilden so die zueinander parallelen Wandabschnitte 39, 40, 41 und 42.

Die Aufnahme 22 für den Feilenhalter 13 umfasst auch den Raum, der für die Aufnahme der Feile 11 benötigt wird. Der Boden 37 der Aufnahme 22 muss nicht zwingend eben ausgeführt sein. Bei einem nicht eben ausgeführten Boden 37 wird die Aufnahme 22 durch den am weitesten in das Aufsetzteil 20 ragenden Bereich definiert.

## Patentansprüche

1. Anordnung zum Feilen einer Sägekette (1) mit einer Führung (19) für einen Feilenhalter (13), einem Feilenhalter (13), einer Feile (11) und einer Sägekette (1), wobei die Sägekette (1) Schneidzähne (7, 8) besitzt, wobei vorlaufend zu jedem Schneidzahn (7, 8) ein Tiefenbegrenzer (9) angeordnet ist, wobei der Feilenhalter (13) auf dem zu feilenden Schneidzahn (7, 8) und dem diesem Schneidzahn (7, 8) vorlaufenden Tiefenbegrenzer (9) abgestützt ist und in einem Winkel (ε) zur Längsrichtung (10) der Sägekette (1) geführt ist, wobei die Führung (19) ein an der Sägekette (1) festlegbares Aufsetzteil (20) besitzt, **dadurch gekennzeichnet, dass** die Führung (19) einen Schlitten (21) besitzt, dass der Schlitten (21) eine Aufnahme (22) für den Feilenhalter (13) bildet, dass der Schlitten (21) an dem Aufsetzteil (20) quer zur Längsrichtung (10) der Sägekette (1) in einer Verschieberichtung (35) verschiebbar gelagert ist, so dass der Schlitten (21) mit dem Feilenhalter (13) bei zunehmender Abnutzung des Schneidzahns (7, 8) einfach nachgeführt werden kann, dass die Verschieberichtung (35) bei auf der Sägekette (1) aufgesetzter Führung (19) senkrecht zur Dachkante (50, 51) der Schneide (25, 45) des zu feilenden Schneidzahns (7, 8) steht, und dass der Feilenhalter (13) an dem Schlitten (21) in dem Winkel (ε) zur Längsrichtung (10) der Sägekette (1) geführt ist.

2. Anordnung nach Anspruch 1,
**dadurch gekennzeichnet, dass** der Feilenhalter (13) zwischen zwei Seitenführungen (23) des Schlittens (21) geführt ist.

3. Anordnung nach Anspruch 2,
**dadurch gekennzeichnet, dass** die Seitenführungen (23) parallel zueinander verlaufen, und dass der Abstand (e) der Seitenführungen (23) etwa 100% bis etwa 120% der Breite (f) des Feilenhalters (13) entspricht.

4. Anordnung nach Anspruch 2 oder 3,
**dadurch gekennzeichnet, dass** das Aufsetzteil (20) mindestens zwei einander zugeordnete Aussparungen (31, 32) besitzt, mit denen das Aufsetzteil (20) auf die Sägekette (1) aufsetzbar ist, wobei die Mittellinie (43, 44) der Aussparungen (31, 32) mit den Seitenführungen (23) des Schlittens (21) einen Winkel (β, γ) einschließt, der mit einem Zahnwinkel (α, δ) der Sägekette (1) einen Winkel von 90° ergibt.

5. Anordnung nach Anspruch 4,
**dadurch gekennzeichnet, dass** die einander zugeordneten Aussparungen (31, 32) in zueinander parallel verlaufenden Wandabschnitten (39, 40, 41, 42) angeordnet sind.

6. Anordnung nach Anspruch 4 oder 5,
**dadurch gekennzeichnet, dass** der Abstand (g) der einander zugeordneten Aussparungen (31, 32) etwa dem 4fachen der Teilung (t) der Sägekette (1) entspricht.

7. Anordnung nach einem der Ansprüche 4 bis 6,
**dadurch gekennzeichnet, dass** die Führung (19) zwei erste Aussparungen (31) besitzt, deren Mittellinie (43) mit den Seitenführungen (23) des Schlittens (21) einen Winkel (β) einschließen, der mit dem Zahnwinkel (α) der rechten Schneidzähne (7) einen Winkel von 90° ergibt, und dass die Führung zwei zweite Aussparungen (32) besitzt, deren Mittellinie (44) mit den Seitenführungen (23) des Schlittens (21) einen Winkel (γ) einschließen, der mit dem Zahnwinkel (δ) der linken Schneidzähne (8) einen Winkel von 90° ergibt.

8. Anordnung nach einem der Ansprüche 4 bis 7,
**dadurch gekennzeichnet, dass** die Breite (c) der Aussparungen (31, 32) größer als die Breite (a) der Sägekette (1) zwischen zwei Nietbolzen (5) eines Verbindungsglieds (4) der Sägekette (1) und kleiner als die Breite (b) eines Nietbolzens (5) ist.

9. Anordnung nach einem der Ansprüche 4 bis 8,
**dadurch gekennzeichnet, dass** die Dächer (36) aller Aussparungen (31, 32) in einer Ebene (38) liegen, die die Aufnahme (22) für den Feilenhalter (13) durchragt.

10. Anordnung nach einem der Ansprüche 2 bis 9,
**dadurch gekennzeichnet, dass** der Boden (37) der Aufnahme (22) durch mindestens einen Quersteg (24) gebildet wird, der die Seitenführungen (23) miteinander verbindet und an dem mindestens eine Lasche (28) zur verschiebbaren Lagerung des Schlittens (21) an dem Aufsetzteil (20) angeordnet ist.

## Claims

1. Assembly for filing a saw chain (1), with a guide (19) for a file holder (13), a file holder (13), a file (11) and a saw chain (1), wherein the saw chain (1) has cutting teeth (7, 8), wherein a depth limiter (9) is running in front of each cutting tooth (7, 8), wherein the file holder (13) is supported on the cutting tooth (7, 8) to be filed and on the depth limiter (9) running in front of said cutting tooth (7, 8) and guided at an angle (ε) to the longitudinal direction (10) of the saw chain (1), wherein the guide (19) has a fit-on part (20) which can be fixed to the saw chain (1),
**characterised in that** the guide (19) has a slide (21), **in that** the slide (21) forms a receptacle (22) for the file holder (13), **in that** the slide (21) is mounted on the fit-on part (20) for displacement transversely to the longitudinal direction (10) of the saw chain (1) in a displacement direction (35), so that the slide (21) with the file holder (13) can easily be repositioned at increasing wear of the cutting tooth (7, 8), **in that** the displacement direction (35) is perpendicular to the top edge (50, 51) of the cutting edge (25, 45) of the cutting tooth (7, 8) to be filed if the guide (19) is placed on the saw chain (1), and **in that** the file holder (13) is guided on the slide (21) at an angle (ε) to the longitudinal direction (10) of the saw chain (1).

2. Assembly according to claim 1,
**characterised in that** the file holder (13) is guided between two lateral guides (23) of the slide (21).

3. Assembly according to claim 2,
**characterised in that** the lateral guides (23) extend parallel to each other, and **in that** the distance (e) between the lateral guides (23) corresponds to approximately 100% to 120% of the width (f) of the file holder (13).

4. Assembly according to claim 2 or 3,
**characterised in that** the fit-on part (20) has at least two recesses (31, 32), which are assigned to each other and with which the fit-on part (20) can be placed on the saw chain (1), wherein the centre line (43, 44) of the recesses (31, 32) encloses with the lateral guides (23) of the slide (21) an angle (β, y), which results in an angle of 90° with a tooth angle (α, δ) of the saw chain (1).

5. Assembly according to claim 4,
**characterised in that** the mutually assigned recesses (31, 32) are located in wall sections (39, 40, 41, 42), which extend parallel to one another.

6. Assembly according to claim 4 or 5,
**characterised in that** the distance between the mutually assigned recesses (31, 32) corresponds to approximately 4 times the pitch (t) of the saw chain (1).

7. Assembly according to any of claims 4 to 6,
**characterised in that** the guide (19) has two first recesses (31), the centre lines (43) of which enclose with the lateral guides (23) of the slide (21) an angle (β), which results in an angle of 90° with the tooth angle (α) of the right-hand cutting teeth (7), and **in that** the guide has two second recesses (32), the centre lines (44) enclose with the lateral guides (23) of the slide (21) an angle (γ), which results in an angle of 90° with the tooth angle (δ) of the left-hand cutting teeth (8).

8. Assembly according to any of claims 4 to 7,
**characterised in that** the width (c) of the recesses (31, 32) is greater than the width (a) of the saw chain (1) between two rivets (5) of a connecting link (4) of the saw chain (1) and less than the width (b) of a rivet (5).

9. Assembly according to any of claims 4 to 8,
**characterised in that** the tops (36) of all recesses (31, 32) lie in a plane (38), which extends through the receptacle (22) for the file holder (13).

10. Assembly according to any of claims 2 to 9,
**characterised in that** the base (37) of the receptacle (22) is represented by at least one transverse web (24), which joins the lateral guides (23) to each other and on which at least one lug (28) is provided for the displaceable mounting of the slide (21) on the fit-on part.

## Revendications

1. Dispositif pour limer une chaîne de scie (1), avec un guide (19) pour un porte-lime (13), un porte-lime (13), une lime (11) et une chaîne de scie (1), dans lequel la chaîne de scie (1) comporte des dents de coupe (7, 8), dans lequel un limiteur de profondeur (9) est prévu en avant de chaque dent de coupe (7, 8), dans lequel le porte-lime (13) est en appui sur la dent de coupe à limer (7, 8) et sur le limiteur de profondeur (9) placé en avant de cette dent de coupe (7, 8) et est guidé suivant un angle (ε) par rapport à la direction longitudinale (10) de la chaîne de scie (1), dans lequel le guide (19) comporte une partie d'assise (20) fixable à la chaîne de scie (1),
**caractérisé en ce que** le guide (19) comporte un chariot (21), **en ce que** le chariot (21) forme un logement (22) pour le porte-lime (13), **en ce que** le chariot (21) est monté sur la partie d'assise (20) à coulissement dans une direction de coulissement (35) transversalement par rapport à la direction longitudinale (10) de la chaîne de scie (1), de sorte que le chariot (21) avec le porte-lime (13) puisse suivre simplement le mouvement avec l'usure croissante de la dent de coupe (7, 8), **en ce que** la direction de coulissement (35) est perpendiculaire à l'arête supérieure (50, 51) du tranchant (25, 45) de la dent de coupe à limer (7, 8) quand le guide (19) est posé sur la chaîne de scie (1), et **en ce que** le porte-lime (13) est guidé sur le chariot (21) suivant l'angle (ε) par rapport à la direction longitudinale (10) de la chaîne de scie (1).

2. Dispositif selon la revendication 1,
**caractérisé en ce que** le porte-lime (13) est guidé entre deux guides latéraux (23) du chariot (21).

3. Dispositif selon la revendication 2,
**caractérisé en ce que** les guides latéraux (23) sont parallèles, et **en ce que** l'écartement (e) des guides latéraux (23) correspond à environ 100% à environ 120% de la largeur (f) du porte-lime (13).

4. Dispositif selon la revendication 2 ou 3,
**caractérisé en ce que** la partie d'assise (20) comporte au moins deux évidements (31, 32) associés l'un à l'autre, avec lesquels la partie d'assise (20) est apte à être posée sur la chaîne de scie (1), dans lequel l'axe médian (43, 44) des évidements (31, 32) forme avec les guides latéraux (23) du chariot (21) un angle (β, γ) qui donne avec un angle de dent (α, β) de la chaîne de scie (1) un angle de 90°.

5. Dispositif selon la revendication 4,
**caractérisé en ce que** les évidements (31, 32) associés l'un à l'autre sont disposés dans des sections de paroi (39, 40, 41, 42) parallèles l'une à l'autre.

6. Dispositif selon la revendication 4 ou 5,
**caractérisé en ce que** l'écartement (g) des évidements (31, 32) associés l'un à l'autre correspond à environ 4 fois le pas (t) de la chaîne de scie (1).

7. Dispositif selon l'une des revendications 4 à 6,
**caractérisé en ce que** le guide (19) comporte deux premiers évidements (31) dont l'axe médian (43) forme avec les guides latéraux (23) du chariot (1) un angle (β) qui donne avec l'angle de dent (α) des dents de coupe droites (7) un angle de 90°, et **en ce que** le guide comporte deux deuxièmes évidements (32) dont l'axe médian (44) forme avec les guides latéraux (23) du chariot (21) un angle (γ) qui donne avec l'angle de dent (δ) des dents de coupe gauches (8) un angle de 90°.

8. Dispositif selon l'une des revendications 4 à 7,
**caractérisé en ce que** la largeur (c) des évidements (31, 32) est plus grande que la largeur (a) de la chaîne de scie (1) entre deux boulons rivés (5) d'un maillon (4) de la chaîne de scie (1), et plus petite que la largeur (b) d'un boulon rivé (5).

9. Dispositif selon l'une des revendications 4 à 8,
**caractérisé en ce que** le haut (36) de tous les évidements (31, 32) est situé dans un plan (38) qui traverse le logement (22) pour le porte-lime (13).

10. Dispositif selon l'une des revendications 2 à 9,
**caractérisé en ce que** le fond (37) du logement (22) est formé par au moins une branche transversale (24) qui relie les guides latéraux (23) et sur laquelle est disposée au moins une collerette (28) pour le montage coulissant du chariot (21) sur la partie d'assise (20).
